# EUROPEAN PATENT SPECIFICATION

(11) **EP 0 928 278 B1**
(45) Date of publication and mention of the grant of the patent: **12.02.2003**
(21) Application number: 97918841.4
(22) Date of filing: 25.09.1997
(51) Int. Cl.: B65G 65/23, B65G 65/34

(54) **APPARATUS FOR INVERTING CONTAINERS**
VORRICHTUNG ZUM KIPPEN VON BEHÄLTERN
DISPOSITIF DE RENVERSEMENT DE CONTENEURS

(30) Priority: 25.09.1996 AU PO253296
(43) Date of publication of application: 14.07.1999
(73) Proprietor: Karpisek, Ladislav Stephan, Caringbah, N.S.W. 2229 (AU)
(72) Inventor: Karpisek, Ladislav Stephan, Caringbah, N.S.W. 2229 (AU)
(74) Representative: King, James Bertram
(86) International application number: AU9700635
(87) International publication number: WO98013284

(56) References cited:
- WO-A-90/01455
- AU-B- 434 551
- FR-A- 2 484 378
- US-A- 4 520 718
- DERWENT ABSTRACT, Accession No. 87-142003/20, Class Q35; & SU,A,1 260 315 (OLENEV), 30 September 1986.
- DERWENT ABSTRACT, Accession No. 96-207658/21, Class Q38; & RU,C,2 043 296 (SOKOLOV), 10 September 1995.

## Description

This invention is concerned generally with apparatus to invert an open topped container to allow the container to be discharged through the open top.

Whilst the invention has been devised with containers in mind which are of the type which comprise a pallet or base to which there is mounted four interlocked sides the invention is not limited to such containers.

When containers are to be emptied the methods adopted depend to a large extent on the contents of the container. In the case of flowable material, such as granules, gravitational discharge is the preferred method. To facilitate this method of emptying a container attempts have been made to develop containers which have bottom discharge means. For a number of reasons containers with a bottom discharge incorporated in the base or pallet forming part of the container have not found favour with users.

An alternative is to tilt the container whilst supported in a frame tilting device on which the container is mounted, to the extent required to the contents to flow from the container over a top edge of one of the container sides as exemplifed by US-A-4 520 718. To provide a generally uniform rate of discharge, which is the normal requirement, the tilt of the container has to be continually adjusted. This discharge method is labour and/or time intensive and is therefore not favoured.

Another discharge method is to mount a hood with a discharge opening, and usually fitted with a flow controlling device, to the open top of the container and then support the container in an inverted condition to allow material within the container to gravity discharge through the discharge opening of the hood. The challenge with this method is how to invert the container/hood assembly, hereinafter termed 'a container', in the most efficient and economical manner. The present invention addresses this challenge.

The present invention provides a container turn-over apparatus in accordance with claim 1.

Further embodiments of the apparatus are defined in the dependent claims.

A presently preferred embodiment of the invention will now be described with reference to the accompanying drawings in which:
Fig.1 is a schematic side view of the apparatus with an end cover open to allow a container to be loaded into the container support,
Fig.2 is a view similar to Fig.1 with a container mounted in the container support,
Fig.3 is a schematic side view of the apparatus of Fig.2 after the closure of the container support end and completion of a first stage in the container turn-over and prepared for the second stage of the turn-over,
Fig.4 is a schematic view of the apparatus after the completion of the second stage of the turn-over with the end cover open ready for the removal of the container,
Fig.5 is an enlarged scrap view of the latching means for retaining each of the end covers of the container support in the closed position,
Fig.6 is a view similar to Fig.5 where the latching means is released and the end cover for the container support is open, and
Fig.7 is a schematic perspective view of retaining means to releasably retain pivot pins of the cradle in pin receiving sockets.

The illustrated turn-over apparatus, indicated generally as 1, includes a base 2 with and a container support 3, hereinafter called a cradle for convenience. The cradle 3 is conventionally made in the form of a skeletal frame of welded metal bars and includes two sides 4, an open front side 6 and a back 7 and it has two end covers 8 and 9 pivotally connected to the frame.

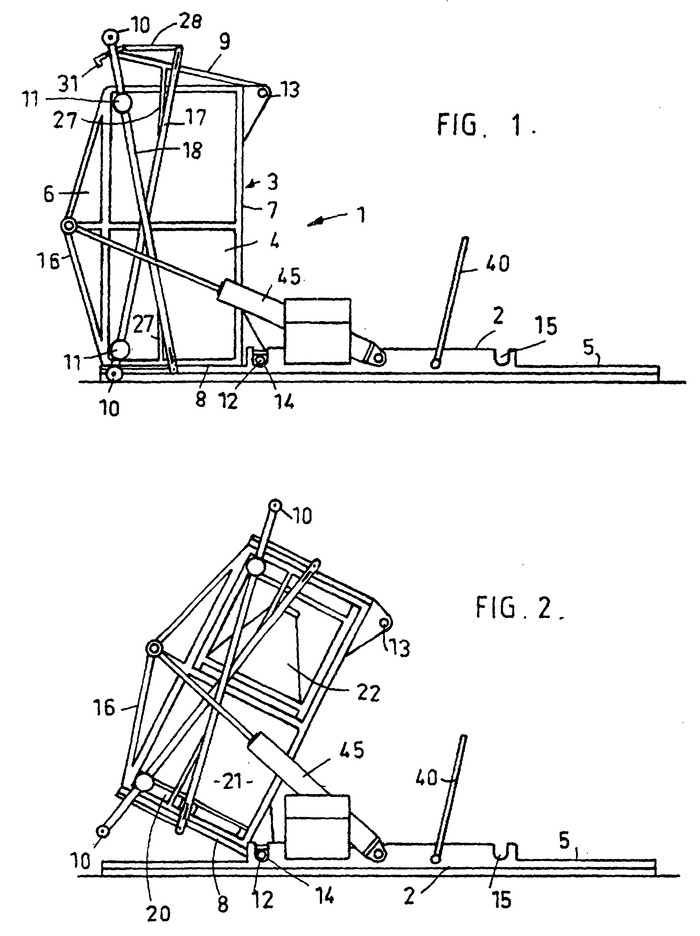

Fixed to the back 7 of the cradle there are two pairs of pivot pins 12 and 13 respectively adjacent the ends of the cradle 3. The base 2 is provided with two pairs of sockets 14 and 15 selectively engagable by the pins 12,13. As illustrated in Fig.1 the cradle 3 is resting on the end cover 8 with the pivot pins 12 engaged in the sockets 14.

A turn -over means comprised of two piston and cylinder assemblies 45 respectively connect the base 2 at points mid-way between the sockets 14,15 to mounting frames 16 on the cradle sides 4 at locations which are mid-length of the cradle.

The pairs of bars 17 and 18 respectively slidably mounted on the cradle sides 4, and as will be seen in Fig.1, each bar includes an end part projecting beyond the cradle ends 8,9 and terminates with a ground engaging end, as illustrated, fitted with a wheel 10. The bars 17 are connected to the cradle end cover 9 and in the Fig.1 illustration the wheels 10 of the bars 17 are in engagement with the ground and the end cover 9 is held raised and latching means to retain the cover 9 closed is in the released condition. The operation of the latching means and the cover hold open arrangements will be described later.

In Fig.2, the cradle turn-over has just commenced around the pivot connection 12,14 by contraction of the devices 45 and the cover 9 is closed and the latching means to hold the end cover 9 closed has been engaged, as will later be described. These operations are related to longitudinal movement of the bar 17 and the disengagement of the wheel 10 thereon from the ground.

It will be understood that in order to maintain engagement of the members 12,14 there needs to be retaining means and this will also be described later.

In Fig.2 a container assembly comprised a pallet 20 with four container sides 21 affixed and with a hood 22 attached is shown in the cradle. The container is placed in the cradle through the open front side 6 of the cradle whilst the cradle was in the Fig.1 condition and whilst the end cover 9 was open. The spacing between the covers 8 and 9 when closed is minimally greater than the overall height of the container and hood assembly so that during a turn-over operation there will be no significant endwise movement of the container hood assembly. The covers 8 and 9 are made openable so that there will be operating clearance for the loading of the container hood assembly into the cradle by a fork lift truck or other like container handing device.

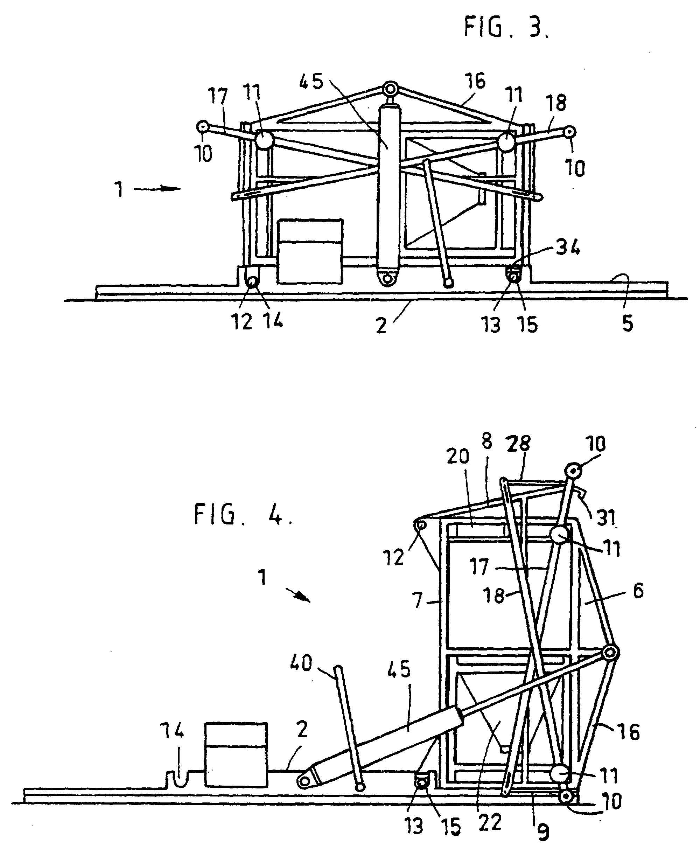

In Fig.3 the cradle is in the mid-position of the turn-over operation and the other pivotal connection members 13,15 are engaged and the turn-over power unit 45 is fully contracted. At this stage the retaining means maintaining the connection between 12,14 is released and a like retaining means is applied to the connection 13,15.

In Fig.4 the second phase of the turn-over process is complete as a result of the operation of the turn-over hydraulic power unit 45. The latching for the cradle end cover 8 has been released and the end cover 8 is raised due to the engagement of the wheel 10 on the bar 18 with the ground to move the bar 18 longitudinally. This is the complementary position to that shown in Fig.1. The end cover 9 now rests on the platform part 5 of the base 2. The container hood assembly can now be removed.

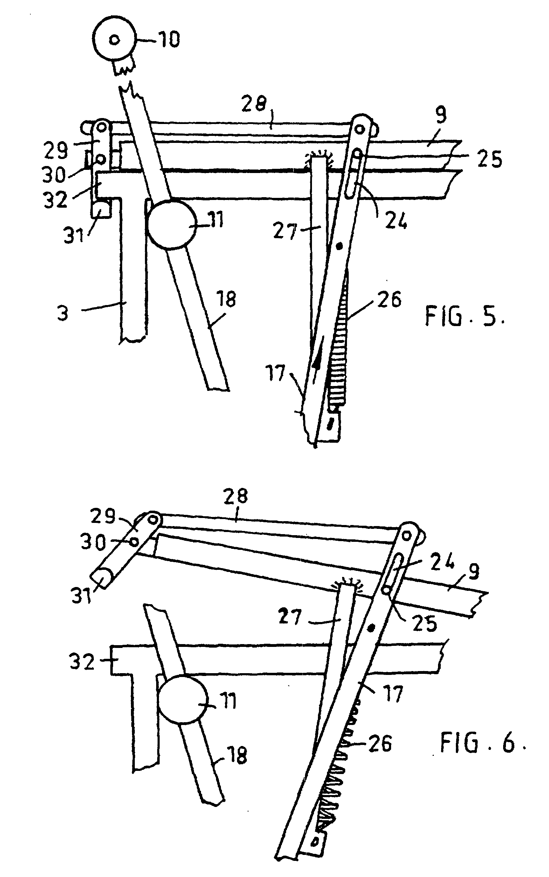

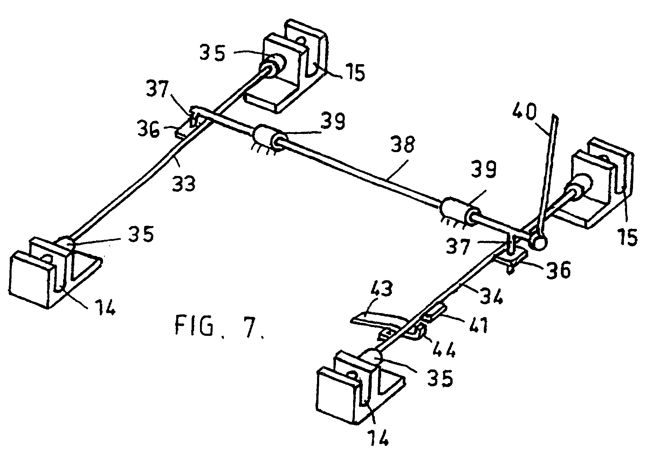

Having described the general operation of the apparatus the mechanisms controlling various operations described will be detailed. The end cover latching arrangement is best seen in Figs.5 and 6.

The pairs of bars 17,18 are both slidably supported adjacent their ground engaging wheels 10 in pivotal bearing blocks 11 mounted on the cradle frame. At the other ends the bars 17,18 have slots 24 respectively engaged with pins 25 respectively on the end covers 8 and 9. It follows, referring now to Fig.1 and Figs.5 and 6, that as the cradle approaches the end of a turn-over cycle the bars 17 are longitudinally moved in the direction of the arrow in Fig.5, by engagement of its wheel 10 with the ground the end cover pins 25 will traverse the slot 24. This movement is resisted by tension springs 26 between end cover spring supports 27 and the bar 17. When the pins 25 engage the ends of the slots 24 the movement of the bars 17 will be transferred to the end cover 9 to pivot the end cover to the Fig.1 and Fig.6 position.

In order that the end cover 9 can be raised its latching means must have been released. The latching means includes links 28 connected at first ends to the bars 17 and at the other ends to first ends of latch bars 29 pivoted at 30 to the end cover 9 and provided with a hooked ends 31. The hooked ends 31 are engaged with lugs 32 on the cradle end. The geometry of the arrangement is such that initial longitudinal movement of the bars 17 in the direction of the arrow in Fig.5, as their wheels 10 come into contact with the ground, will move the links 28 longitudinally and this will pivot the latch bars 29 and disengage the hooked ends 31 from the lugs 32. This will occur prior to the ends of the slots 24 engaging the pins 25 to apply end cover lifting force to the end cover 9.

In an end cover closing operation, as will occur at the commencement of a cradle turn-over movement from the Fig.1 to the Fig.2 position, the cradle will pivot and move relative to the bars 17 as their wheels 10 are still held engaged with the ground because of the force applied by the springs 26. The cradle end will approach and then engage the end cover 9, which holds its position due to the pins 25 being engaged with the lower end of the bar slots 24. As pivoting movement of the cradle continues the pins 25 will traverses the slots 24 as the wheels 10 of the bars 17 are still engaged with the ground. At this stage due to the force applied by the springs 26 the bars 17 will slide through their bearings 11. The movement of the pins 25 along the slots 24 will result in movement of the links 28 and the pivoting of the members 29 and engagement of the hooks 31 with the lugs 32. When the pins 25 engage the upper ends of the slots 24 the bars 17 can no longer move relative to the cradle under the influence of the springs 26 and the wheels 10 will be lifted from the ground.

Referring now to Fig.7, this is a diagrammatic representation of the retaining means for the pins 12,13 in the sockets 14,15. The sockets 14,15 are represented as members adapted for fixing to the base 2. The retaining means comprises two bars 33,34 slidably supported in bearings 35 on the socket members 14,15 and of a length such that when extending across the sockets 15 they do not extend across the sockets 14.

The bars 33,34 are both provided with lugs 36 engaged by legs 37 fixed to a connecting shaft 38 pivotally supported in bearing 39 on the frame 2. There is a handle 40 fixed to the shaft 38 whereby the bars 33,34 can be slid backwards and forwards in the bearing 35. The allows the bars 33,34 to be placed across one or other of the sockets 14,15 but not both at the same time. In this way the pin pairs 12,13 of the cradle are retained in one or the other of the socket pairs 14,15.

A security means is provided to prevent the operation of the bars 33,34 at any time except when the cradle is in the Fig.3 position. The security means includes a lug 41 on the bar 34 and an arm 42 pivoted to the base 2. The arm 42 has a long portion 43 and a lug 44 on a short portion of the arm 42. The arrangement is such that the portion 43 of the arm 42 normally rests on the ground and lifts the lug 44 into the path of travel of the lug 44 thereby preventing the withdrawal of the bars 33,34 (in the illustrated arrangement) from the sockets 15.

When the cradle approaches the Fig.3 position a projection of suitable size and suitably located on the cradle engages the lug 44 to move it out f the path of travel if the bar lug 41. This allows the bars 33,34 to be disengaged from the sockets 15 (releasing the cradle pins 13) and to be engaged with the sockets 14 (to retains the cradle pins 12 in the sockets 14). As the cradle pivots to the weight of the arm portion 43 pivots the arm 42 and places the bar lug 41 on the other side of the arm lug 44 preventing the reverse sliding movement of the bars 33,34. As will be understood it is preferred if both bars 33 and 34 have lugs 41 for respective co-operation with two arms 42.

The foregoing is a presently preferred form of the invention. It will be understood that the construction described and illustrated could be modified without departing from the inventive concepts disclosed.

## Claims

1. A container turn-over apparatus (1) including a container support (3) having two ends and an open side (6) whereby a container assembly (20,21,22) can be entered into and removed from said container support (3), a base (2) with two spaced apart first connection means (14,15) respectively engagable by two spaced apart second connection means (12,13) on the respective ends of the container support (3) to provide releasable pivotal connections (12-14, 13-15) between the base (2) and the container support (3), and turn-over means (45) permanently connecting the base (2) to the container support (3) whereby the container support (3) can be turned end over end by sequential engagement of said pivotal connections (12-14, 13-15) the apparatus (1) being **characterised in that** the two ends are respectively provided with openable end covers (8,9) having latch means (31,32) to releasably retain the end covers (8,9) closed; and **in that** the container support (3) can be turned from a first position where it stands on one of its end covers (8,9) to a second position where it stands on the other of its end covers (8,9).

2. A container turn-over apparatus as claimed in claim 1 wherein the latch means (31,32) for each end cover (8,9) is operable by an associated latch operating means (28,29), the arrangement being such that as said container support (3) approaches the completion of a turn-over action the latch operating means (28,29) associated with the latch means (31,32) of the end cover upon which said container support will not stand at the end of a turn-over action releases its associated latch means (31,32), and at the commencement of a turn-over action the latch operating means (31,32) associated with the latch means (31,32) of the end cover opposite to that upon which said container support stands at the commencement of the turn-over action engages its associated latch means (31,32).

3. A turn-over apparatus as claimed in claim 2 where each of said latch operating means (28,29) subsequent to releasing its associated latch means (31,32) also opens the end cover having that latch means (31,32) against the action of means (26) biassing the end cover to closed position and engages its associated latch means (31,32) after the closure of the end cover having that latch means.

4. A turn-over apparatus as claimed in claim 3 wherein the end covers (8,9) for the container support (3) are hingedly connected to a body part of said container support (3).

5. A turn-over apparatus as claimed in any one of the claims 1 to 4 wherein each pivotal connection means (12-14, 13-15) respectively comprise a pair of pins (12) engagable with and disengagable from a pair of sockets (14) and a pair of pins (13) engagable with and disengagable from a pair of sockets (15) and releasable retainer means (33,34) mounted on the base (2) to retain the pins (12,13) in the sockets (14,15) of the pivotal connection means about which said container'support (3) is to be pivoted.

6. A turn-over apparatus as claimed in claim 7 where the pins (12,13) of the two pivotal connection means are on the container support (3) and the sockets (14,15) engagable by the pins (12,13) are on the base (3). means.

7. A turn-over apparatus as claimed in claim 5 or claim 6 wherein the releasable retainer means (33,34) for both pivotal connection means (12-14, 13-15) are interconnected and operable in unison so that when the retainer means of one pivotal connection means is moved into a pin retaining position the retainer means of the other pivotal connection means is moved into a pin release position.

8. A turn-over apparatus as claimed in claim 7 including security means (41,43,44) which when operative prevents and when inoperative permits operation of said interconnected retainer means (33,34), said security means (41,43,44) being automatically released by the container support (3) when in a mid-position in a turn-over sequence with both pivotal connection means (12-14,13-15) engaged.

9. A turn-over apparatus as claimed in any one of claims 5 to 8 having control means for said turn-over means (45) operated by said interconnected retainer means (33,34) to prevent operation of said turn-over means (45) where a condition exists other than one where one of said pivotal connection means (12-14,13-15) is retained and the other pivotal connection means is not retained.

10. A turn-over apparatus as claimed in claim 9 where said turn-over means comprises a pair of extensible hydraulic members (45) linking the container support (3) to the base (2) and said control means is a hydraulic fluid flow control valve on the base (2) operated by a cam fixed to and moving with said interconnected retainer means (33,34).

11. A turn-over apparatus as claimed in claim 8 wherein said security means is a pivoted arm (43) mounted on the base (2) and biassed to position a lug (44) on the arm (43) into alignment with an abutment means (41) of said interconnected retainer means (33,34) and which is held removed from said alignment by an actuator fixed to said container support (3) when said container support (3) is in a position where both pivotal connection means (12-14,13-15) are engaged.

12. A turn-over apparatus as claimed in claim 3 wherein the latch operating means for each end cover (8,9) includes pairs of elongated bars (17,18) respectively slidably mounted on the container support (3), said elongated bars (17,18) project beyond a back (7) of said container support (3) positioned opposite the open side (6) of said container support (3) and terminate in ground engaging ends (10), the elongated bars (17,18) of each pair are both coupled to an associated end cover (8,9) so part of a sliding movement of said bars (17,18) will open the associated end cover, the bar pairs (17,18) are respectively coupled through links (28) to latch arms (29) pivotally mounted on the associated end cover to effect latching and unlatching of said latch means (31,32), said latch arms (29) are movable by movement of said links (28) in response to longitudinal movement of said elongated bars (17,18) resulting from engagement of the bar ends (10) with the ground, the arrangement being such that as a container support (3) approaches the end of a turn-over movement the ground engaging ends (10) of the longitudinal bars (17,18) connected to the end cover which will be uppermost when the container support completes its turn-over will engage the ground causing longitudinal movement of said elongated bars (17,18) from a rest position against a bias towards the rest position, the coupling of those elongated bars (17,18) to said uppermost end cover is such that longitudinal movement of said elongated bars (17,18) will not be transferred to said uppermost end cover to open said uppermost end cover until after the longitudinal movement of the elongated bars (23) has unlatched the latching means (31,32), and at the commencement of a container support turn-over the biassed return movement of the elongated bars (17,18) to the rest position as said ground engaging bar ends (10) leave the ground will sequentially allow said uppermost end cover to close before the latching of said latching means (31,32).

## Patentansprüche

1. Vorrichtung (1) zum Überkippen eines Behälters mit einer Behälteraufnahme (3) mit zwei Enden und einer offenen Seite (6) für das Einsetzen und Entfernen einer Behältereinheit (20, 21, 22) in die bzw. aus der Behälteraufnahme (3), mit einer Plattform (2) mit zwei im Abstand voneinander liegenden Anschlussmitteln (14, 15), in die zwei im Abstand voneinander vorgesehene zweite Anschlussmittel (12, 13) an den zugeordneten Enden der Behälteraufnahme (3) eingreifen können zwecks Herstellung einer lösbaren Drehverbindung (12 bis 14, 13 bis 15) zwischen der Plattform (2) und der Behälteraufnahme (3) sowie mit Umschwenkmitteln (45), welche die Plattform (2) ständig mit der Behälteraufnahme (3) verbinden, so dass die Behälteraufnahme (3) im Zuge des aufeinanderfolgenden Eingriffs der Drehanschlüsse (12 bis 14, 13 bis 15) auf den Kopf stellbar ist, **dadurch gekennzeichnet, dass** die beiden Enden jeweils mit einer zu öffnenden Endabdeckung (8 bzw. 9) und mit jeweils einem Verriegelungsmittel (31 bzw. 32) versehen sind, mittels dessen die Endabdeckungen (8, 9) lösbar in ihrer geschlossenen Stellung gehalten sind und dass die Behälteraufnahme (3) aus einer ersten Stellung, in der sie auf einer ihrer Endabdeckungen (8, 9) steht, in eine zweite Stellung verschwenkbar ist, in der sie auf der anderen ihrer Endabdeckungen (8, 9) steht.

2. Überkippvorrichtung nach Anspruch 1, **dadurch gekennzeichnet, dass** die Verriegelung (31 bzw. 32) für jede Endabdeckung (8 bzw. 9) über ein zugeordnetes Betätigungsorgan (28 bzw. 29) betätigbar ist, wobei die Anordnung so getroffen ist, dass das Betätigungsorgan (28, 29) die Verriegelung (31 bzw. 32) derjenigen Endabdeckung, auf der die Behälteraufnahme in der Endlage nicht stehen soll, gegen Ende des Überkippvorganges der Behälteraufnahme (3) entriegelt, und dass zu Beginn eines Überkippvorganges das Betätigungsorgan (28 bzw. 29), das der Verriegelung (31 bzw. 32) der Endabdeckung zugeordnet ist, die der gegenüber liegt, auf der die Behälteraufnahme zu Beginn des Überkippvorganges steht, mit der zugeordneten Verriegelung (31 bzw. 32) verbindbar ist.

3. Überkippvorrichtung nach Anspruch 2, **dadurch gekennzeichnet, dass** jedes Betätigungsorgan (28, 29) für die Verriegelung nach Freigabe der zugeordneten Verriegelung (31, 32) auch die zugehörige Endabdeckung entgegen dem Druck von die Endabdeckung in der geschlossenen Position haltenden Mitteln (26) öffnet und in die zugeordnete Verriegelung (31, 32) nach Schließen der diese Verriegelung aufweisende Endabdeckung eingreift.

4. Überkippvorrichtung nach Anspruch 3, **dadurch gekennzeichnet, dass** die Endabdeckungen (8, 9) für die Behälteraufnahme (3) schwenkbar mit dem Körper der Behälteraufnahme (3) verbunden sind.

5. Überkippvorrichtung nach einem der vorhergehenden Ansprüche 1 bis 4, **dadurch gekennzeichnet, dass** jeder Drehanschluss (12 bis 14, 13 bis 15) jeweils ein Paar Zapfen (12 bzw. 13) aufweist und jedes in ein zugeordnetes Paar Lager (14 bzw. 15) ein- und ausrastbar ist sowie lösbar an der Plattform (2) angeordnete Haltemittel (33, 34), die die Zapfen (12, 13) in den Lagern (14, 15) desjenigen Drehanschlusses halten, um den die Behälteraufnahme (3) gedreht werden soll.

6. Überkippvorrichtung nach Anspruch 7, **dadurch gekennzeichnet, dass** die Zapfen (12, 13) der beiden Drehanschlüsse an der Behälteraufnahme (3) und die sie aufnehmenden Lager (14, 15) an der Plattform (2) angeordnet sind.

7. Überkippvorrichtung nach Anspruch 5 oder 6, **dadurch gekennzeichnet, dass** die lösbaren Haltemittel (33, 34) für beide Drehanschlüsse (12 bis 14, 13 bis 15) miteinander gekoppelt und gemeinsam betätigbar sind, so dass bei Bewegung des Haltemittels eines Drehanschlusses in seine den zugeordneten Zapfen haltende Wirkstellung das Haltemittel des anderen Drehanschlusses in die Freigabestellung gelangt.

8. Überkippvorrichtung nach Anspruch 7, **gekennzeichnet durch** Sicherungsmittel (41, 43, 44), die in ihrer Wirkstellung die Betätigung der miteinander verbundenen Haltemittel (33, 34) unterbinden, diese aber in ihrer unwirksam Stellung erlauben, wobei die Sicherungsmittel (41, 43, 44) über die Behälteraufnahme (3) automatisch freigegeben werden, wenn im Überkippvorgang bei in Eingriff stehenden Drehanschlüssen (12 bis 14, 13 bis 15) die Mittelstellung erreicht ist.

9. Überkippvorrichtung nach einem der Ansprüche 5 bis 8, **gekennzeichnet durch** Steuermittel für die Kippvorrichtung (45), die **durch** die miteinander verbundenen Haltemittel (33, 34) betätigt wird, um eine Betätigung der Kippvorrichtung (45) in einer Stellung zu verhindern, in der nicht jeweils einer der Drehanschlüsse (12 bis 14 bzw. 13 bis 15) eingerastet und der andere Drehanschluss freigegeben ist.

10. Überkippvorrichtung nach Anspruch 9, **dadurch gekennzeichnet, dass** die Kippvorrichtung aus einem Paar hydraulischer Hubzylinder (45) besteht, die die Behälteraufnahme (3) mit der Plattform (2) verbinden, und dass die Steuervorrichtung ein Stromventil an der Plattform (2) ist, das über eine an den miteinander verbundenen Haltemitteln (33,34) befestigten und mit diesen zusammen bewegbaren Kurvenscheibe betätigt wird.

11. Überkippvorrichtung nach Anspruch 8, **dadurch gekennzeichnet, dass** das Sicherungsmittel ein schwenkbarer auf der Plattform (2) angeordneter Hebel (43) ist, der einen Ansatz (44) auf dem Hebel (43) gegen einen Anschlag (41) auf den miteinander verbundenen Haltemitteln (33, 34) drückt und von diesem durch ein an der Behälteraufnahme (3) befestigtes Betätigungsorgan wegbewegt wird, wenn die Behälteraufnahme (3) eine Position einnimmt, in der beide Drehanschlüsse (12 bis 14, 13 bis 15) in Eingriff stehen.

12. Überkippvorrichtung nach Anspruch 3, **dadurch gekennzeichnet, dass** das Betätigungsmittel für die Verriegelung jeder Endabdeckung (8, 9) ein Stangenpaar (17, 18) umfasst, das jeweils an der Behälteraufnahme (3) gleitend befestigt ist und über den Rücken (7) der Behälterauflage (3) vorsteht, welcher der offenen Seite (6) der Behälteraufnahme (3) gegenüberliegt, und ein am Boden aufsetzendes Ende (10) aufweist, wobei die Stangen (17, 18) jedes Paares beide mit einer zugeordneten Endabdeckung (8, 9) verbunden sind, so dass in einem Abschnitt der Verschiebebewegung der Stangen (17, 18) die zugeordnete Endabdeckung geöffnet wird, wobei die Stangenpaare (17, 18) jeweils über ein Gestänge (28) mit drehbar an der zugeordneten Endabdeckung befestigten Riegelhebeln (29) gekoppelt sind, um die Riegelmittel (31, 32) zu verriegeln und zu entriegeln, wobei die Riegelhebel (29) durch Bewegen des Gestänges (28) im Zuge der Längsverschiebung der Stangen (17, 18) bewegbar sind, die beim Aufliegen der Stangenenden (10) auf dem Boden entsteht, wobei die Anordnung so gewählt ist, dass wenn die Behälteraufnahme (3) gegen das Ende des Überkippvorganges gelangt, die Aufsetzenden (10) der mit der jeweils in der Endlage des Kippvorganges zuoberst liegenden Endabdeckung verbundenen Stangen (17, 18) auf dem Boden aufsitzen und somit die Stangen (17, 18) aus einer Ruhestellung entgegen ihrer Vorspannung aus einer Ruhestellung in Längsrichtung bewegen, wobei der Anschluss der Stangen (17, 18) an die zuoberst liegende Endabdeckung so hergestellt ist, dass die Längsverschiebung der Stangen (17, 18) nicht auf die jeweils
oberste Endabdeckung übertragen wird, ehe nicht die Riegelmittel (31, 32) infolge der Längsverschiebung der Stangen (28) entriegelt worden sind, und wobei mit Beginn eines Überkippvorganges der Behälteraufnahme, die Rückverschiebung unter Vorspannung der Stangen (17, 18) in die Ruhestellung erfolgt, sobald die am Boden angreifenden Stangenenden (10) vom Boden abheben und dadurch die jeweils oberste Endabdeckung Zug um Zug geschlossen werden kann, ehe die Riegelmittel (31, 32) schließen.

## Revendications

1. Appareil de retournement de conteneur (1) comprenant un support de conteneur (3) possédant deux extrémités et un côté ouvert (6), moyennant lequel un ensemble conteneur (20, 21, 22) peut être entré à l'intérieur dudit support de conteneur (3) ou retiré de celui-ci, une base (2) avec deux premiers moyens d'accouplement écartés (14, 15) dans lesquels peuvent respectivement s'engager deux seconds moyens d'accouplement écartés (12, 13) sur les extrémités respectives du support de conteneur (3) pour constituer des liaisons pivots détachables (12-14, 13-15) entre la base (2) et le support de conteneur (3) et des moyens de retournement (45) reliant en permanence la base (2) au support de conteneur (3) moyennant lesquels le support de conteneur (3) peut être retourné d'une extrémité à l'autre par un engagement séquentiel desdites liaisons pivots (12-14, 13-15), l'appareil étant **caractérisé en ce que** les deux extrémités sont respectivement équipées de caches d'extrémité ouvrables (8, 9) possédant des moyens de verrouillage (31, 32) pour maintenir de façon détachable les caches d'extrémité (8, 9) fermés et **en ce que** le support de conteneur (3) peut être tourné depuis une première position dans laquelle il repose sur l'un de ses caches d'extrémité (8, 9) vers une seconde position dans laquelle il repose sur l'autre de ses caches d'extrémité (8, 9).

2. Appareil de retournement de conteneur selon la revendication 1, dans lequel des moyens de verrouillage (31, 32) pour chacun des caches d'extrémité (8, 9) sont actionnables par le biais de moyens de commande de verrouillage associés (28, 29), le dispositif étant tel que lorsque le support de conteneur (3) approche la fin d'une action de retournement, les moyens de commande de verrouillage (28, 29) associés aux moyens de verrouillage (31, 32) du cache d'extrémité sur lequel ledit support de conteneur va reposer à la fin de l'action de retournement relâchent les moyens de verrouillage (31, 32) qui leur sont associés, et au début d'une action de retournement les moyens de commande de verrouillage (28, 29) associés aux moyens de verrouillage (31, 32) du cache d'extrémité à l'opposé de celui sur lequel repose le support de conteneur au début de l'action de retournement, enclenchent les moyens de verrouillage (31, 32) qui leur sont associés.

3. Appareil de retournement selon la revendication 2, dans lequel chacun desdits moyens de commande de verrouillage (28, 29) suite au relâchement des moyens de verrouillage (31, 32) qui lui sont associés, ouvre également le cache d'extrémité possédant lesdits moyens de verrouillage (31, 32) contre l'action des moyens (26) biaisant le cache d'extrémité en position fermée et enclenche les moyens de verrouillage (31, 32) qui lui sont associés après la fermeture du cache d'extrémité possédant lesdits moyens de verrouillage.

4. Appareil de retournement selon la revendication 3, dans lequel les caches d'extrémité (8, 9) pour le support de conteneur (3) sont accouplés de façon articulée à une partie corps dudit support de conteneur (3).

5. Appareil de retournement selon l'une quelconque des revendications 1 à 4, dans lequel chacun des moyens de liaison pivots (12-14, 13-15) comprend respectivement une paire d'axes (12) pouvant s'engager et se dégager d'une paire de cavités (14) et une paire d'axes (13) pouvant s'engager et se dégager d'une paire de cavités (15) et des moyens de retenue détachables (33, 34), montés sur la base (2) pour maintenir les axes (12, 13) dans les cavités (14, 15) des moyens de liaison pivots autour desquels ledit support de conteneur (3) doit pivoter.

6. Appareil de retournement selon la revendication 7, dans lequel les axes (12, 13) des deux moyens de liaison pivots sont sur le support de conteneur (3) et les cavités (14, 15) dans lesquelles peuvent s'engager les axes (12, 13) sont sur la base (3).

7. Appareil de retournement selon la revendication 5 ou la revendication 6, dans lequel les moyens de retenue détachables (33, 34) pour les deux moyens de liaison pivots (12-14, 13-15) sont interconnectés et actionnables à l'unisson de telle sorte que lorsque les moyens de retenue de l'un des moyens de liaison pivots sont déplacés vers une position de maintien de l'axe, les moyens de retenue des autres moyens de liaison pivots sont déplacés dans une position de relâchement de l'axe.

8. Appareil de retournement selon la revendication 7 comprenant des moyens de sécurité (41, 43, 44) qui empêchent, lorsqu'ils sont opérationnels, et permettent, lorsqu'ils sont inopérants, le fonctionnement desdits moyens de retenue interconnectés (33, 34), lesdits moyens de sécurité (41, 43, 44) étant automatiquement relâchés par le support de conteneur (3) lorsqu'il est en position intermédiaire dans une séquence de retournement, les deux moyens de liaison pivots (12-14, 13-15) étant engagés.

9. Appareil de retournement selon l'une quelconque des revendications 5 à 8, possédant des moyens de commande pour lesdits moyens de retournement (45) actionnés par lesdits moyens de retenue interconnectés (33, 34) pour empêcher le fonctionnement desdits moyens de retournement (48) en présence d'une condition autre qu'une condition dans laquelle l'un desdits moyens de liaison pivots (12-14, 13-15) est maintenu et l'autre desdits moyens de liaison pivots n'est pas maintenu.

10. Appareil de retournement selon la revendication 9, dans lequel lesdits moyens de retournement comprennent une paire d'éléments hydrauliques extensibles (45) reliant le support de conteneur (3) à la base (2) et lesdits moyens de commande sont une vanne de régulation de débit de fluide hydraulique sur la base (2) actionnée par une came fixée aux moyens de retenue interconnectés (33, 34) et se déplaçant avec ceux-ci.

11. Appareil de retournement selon la revendication 8, dans lequel lesdits moyens de sécurité sont un bras pivotant (43) monté sur la base (2) et biaisé pour positionner une patte (44) sur le bras (43) en alignement avec des moyens de butée (41) desdits moyens de retenue interconnectés (33, 34) et qui est maintenu en dehors dudit alignement par un actionneur fixé audit support de conteneur (3) lorsque ledit support de conteneur (3) est dans une position dans laquelle les deux moyens de liaison pivots (12-14, 13-15) sont engagés.

12. Appareil de retournement selon la revendication 3 dans lequel les moyens de commande de verrouillage pour chaque cache d'extrémité (8, 9) comprennent des paires de barres allongées (17, 18) montées respectivement de façon coulissante sur le support de conteneur (3), lesdites barres allongées (17, 18) se projetant au-delà d'un dos (7) dudit support de conteneur (3) positionné à l'opposé dudit côté ouvert (6) dudit support de conteneur (3) et se terminent par des extrémités s'engageant dans le sol (10), les barres allongées (17, 18) de chaque paire sont accouplées à un cache d'extrémité associé (8,9) de telle sorte qu'une partie du mouvement coulissant desdites barres (17, 18) permettra d'ouvrir le cache d'extrémité associé, les paires de barres (17, 18) sont respectivement accouplées par le biais de liaisons (28) à des bras de verrouillage (29) montés de façon articulée sur le cache d'extrémité associé pour assurer le verrouillage et le déverrouillage desdits moyens de verrouillage (31, 32), lesdits bras de verrouillage (29) peuvent être déplacés par le mouvement desdites liaisons (28) en réponse à un mouvement longitudinal desdites barres allongées (17, 18) résultant de la mise en prise des extrémités de barres (10) avec le sol, le dispositif étant tel que lorsqu'un support de conteneur (3) approche de la fin d'un mouvement de retournement, les extrémités s'engageant dans le sol (10) des barres longitudinales (17, 18) accouplées au cache d'extrémité qui sera le plus haut lorsque le support de conteneur termine son retournement, vont s'engager dans le sol entraînant un mouvement longitudinal desdites barres allongées (17, 18) à partir d'une position de repos à l'encontre d'une inclinaison en direction de vers la position de repos, l'accouplement de ces barres allongées (17, 18) audit cache d'extrémité le plus haut est tel que le mouvement longitudinal desdites barres allongées (17, 18) ne sera pas transféré audit cache d'extrémité le plus haut pour ouvrir ledit cache d'extrémité le plus haut une fois que le mouvement longitudinal des barres allongées (28) a provoqué le déverrouillage des moyens de verrouillage (31, 32), et au début d'un retournement d'un support de conteneur, le mouvement de retour biaisé des barres allongées (17, 18) vers la position de repos lorsque lesdites extrémités de barre s'engageant dans le sol (10) quittent le sol permettra séquentiellement au cache d'extrémité le plus haut de se fermer avant le verrouillage desdits moyens de verrouillage (31, 32).
